# EUROPÄISCHE PATENTSCHRIFT

(11) **EP 2 646 143 B1**
(45) Veröffentlichungstag und Bekanntmachung des Hinweises auf die Patenterteilung: **08.11.2017**
(21) Anmeldenummer: 11788431.2
(22) Anmeldetag: 23.11.2011
(51) Int. Cl.: B01J 20/10, B01J 20/26, B01J 20/28, B01J 20/30, C08K 3/36, G01L 19/06

(54) **KOMPOSITWERKSTOFF, FORMKÖRPER, ELEKTRONISCHES GERÄT MIT FORMKÖRPER, UND VERFAHREN ZUR HERSTELLUNG FÜR EINEN FORMKÖRPER**
COMPOSITE, MOLDINGS THEROF, ELECTRONIC DEVICES COMPRISING SAID MOLDINGS AND METHOD TO PRODUCE SAID MOLDINGS
MATÉRIAU COMPOSITE, CORPS MOULÉS ET SON PROCESSUS DE PRODUCTION, ET DISPOSITIF ÉLECTRONIQUE COMPRENANT CES CORPS MOULÉS

(30) Priorität: 01.12.2010 DE 102010062295
(43) Veröffentlichungstag der Anmeldung: 09.10.2013
(73) Patentinhaber: Endress+Hauser GmbH+Co. KG, 79689 Maulburg (DE)
(72) Erfinder: UEHLIN, Thomas, 79650 Schopfheim (DE); ROßBERG, Andreas, 79713 Bad Säckingen (DE); LOPATIN, Sergej, 79540 Lörrach (DE)
(74) Vertreter: Andres, Angelika Maria
(86) Internationale Anmeldenummer: PCT/EP2011/070812
(87) Internationale Veröffentlichungsnummer: WO 2012/072465

(56) Entgegenhaltungen:
- EP-A1- 1 323 468
- WO-A1-2004/043409
- CHUJO Y ET AL: "ORGANIC POLYMER HYBRIDS WITH SILICA GEL FORMED BY MEANS OF THE SOL-GEL METHOD", ADVANCED IN POLYMER SCIENCE, BERLIN, DE, Bd. 100, 1. Januar 1992 (1992-01-01), Seiten 12-29, XP000431443,

## Beschreibung

Die vorliegende Erfindung betrifft ein elektronisches Gerät mit einem Formkörper welcher einen Kompositwerkstoff aufweist.

Elektronische Geräte weisen häufig bauartbedingt ein Gehäuse auf, in welches Feuchtigkeit in Form von Wasserdampf eindringen kann. Kondensation dieses Wasserdampfs auf Schaltungskomponenten im Innern des Gehäuses, kann zur Beeinträchtigung bzw. zum Ausfall von Geräten führen. Es ist daher erforderlich, dieses zu langfristig verhindern.

Hierzu ist es bekannt, Feuchtefilter in Gehäuseöffnungen vorzusehen, oder Absorber im Gehäuse anzuordnen. Die beschriebenen Adsorber erweisen sich aber für den langfristigen Einsatz insbesondere unter Temperaturwechseln als nicht zufriedenstellend.

Die Offenlegungsschrift WO 2004/043409 A1 offenbart ein Kompositmaterial mit einem speziellen Füll- stoff sowie die Verwendung eines Kompositmaterials mit einem speziellen Füllstoff für dentale Zwecke.

Die Offenlegungsschrift EP 1 323 468 A1 betrifft einen Formkörper aus einem Kompositmaterial zum Absorbieren von Wasser.

Chujo et al offenbaren. Organische Polymerhybride mit Silica Gel, welceh mittels Sol-Gel Verfahren gebildet sind (Advances in Polymer Science, Vol. 100 (1992-01-01), Seiten 12-29).

Die noch nicht veröffentlichte Patentanmeldung DE 10 2010 038 986 offenbart einen Kompositwerkstoff, welcher eine Polymermatrix und ein Zeolith aufweist. Insoweit als Zeolithe nur bei vergleichsweise hohen Temperaturen adsorbiertes Wasser desorbieren lassen, erfordert der Kompositwerkstoff jedoch den Einsatz von entsprechend temperaturbeständigen Polymeren, wenn eine Trocknung von

Formkörpern aus diesem Kompositwerkstoff möglich sein soll. Dies führt jedoch dazu, dass die Auswahl geeigneter Polymere erheblich eingeschränkt ist, und dass zudem die Kosten für den Kompositwerkstoff steigen, da die temperaturbeständigen Polymere teuer sind. Zudem wird bei normalen Betriebstemperaturen eines gängigen elektronischen Geräts die Desorptionstemperatur von im Zeolith gebundenen Wasser praktisch nicht erreicht. Dies bedeutet, dass ein Formkörper aus einem zeolithhaltigen Kompositwerkstoff auch bei großer Trockenheit in der Umgebung kaum in der Lage ist, gebundenes Wasser wieder abzugeben. Damit entfällt die Möglichkeit, durch kontrolliertes Freisetzen von Feuchte in Phasen von Trockenheit die Standzeit eines aus dem Kompositwerkstoff gebildeten Formkörpers, der als Trocknungskörper dienen soll, zu verlängern.

Es ist daher die Aufgabe der vorliegenden Erfindung, hier Abhilfe zu schaffen.

Die Aufgabe wird erfindungsgemäß gelöst durch das elektronische Gerät gemäß Anspruch 1.

Das erfindungsgemäße elektronische Gerät, welches insbesondere ein Messgerät sein kann, weist mindestens ein Gehäuse mit mindestens einem Innenraum, welcher eine elektronische Schaltung enthält, wobei das Gerät mindestens einen Gaspfad aufweist, über welchen Wasserdampf in das Gehäuse gelangen kann, wobei das Gerät erfindungsgemäß mindestens einen Formkörper aufweist,
Der erfindungsgemäße Kompositwerkstoff umfasst: eine Polymermatrix; und ein Silica Gel, welches in der Polymermatrix gebunden ist; wobei der Volumenanteil des Silica Gels am Volumen des Kompositwerkstoffs mindestens 50%, insbesondere mindestens 65% beträgt.

In einer Weiterbildung der Erfindung weist die Polymermatrix ein Polymer auf, welches ausgewählt ist aus einer Gruppe von thermoplastischen Polymeren wie Fluor-Kunststoffen, Polyaryletherketonen, Schwefelpolymeren, Polyolephinen und hochwärmebeständigen Polymeren besteht.

Die Fluor-Kunststoffe umfassen erfindungsgemäß PTFE bzw. Polytetrafluoretylen, PCTFE bzw. Polychlortrifluorethylen, ECTFE bzw. Ethylenchlortrifluorethylen oder Ethylen-Chlortrifluorethylen-Fluorcopolymer, FEP bzw. Fluorethylenpropylen, PFA bzw. Perfluoroalkoxylalkan sowie PVDF bzw. Polyvinylidenfluorid.

Polyaryletherketone umfassen erfindungsgemäß PEEK bzw. Polyetheretherketon und PEK bzw. Polyetherketon.

Die Schwefelpolymere umfassen erfindungsgemäß PSU bzw. Polysulfon, PES bzw. Polyethersulfon, PPS bzw. Polyphenylensulfid und PPSU bzw. Polyphenylsulfon.

Die hochwärmebeständigen Kunststoffe umfassen erfindungsgemäß auch PA bzw. Polyamid, PI bzw. Polyimid, PAI bzw. Polyamidimid und PEI bzw. Polyetherimid.

Weitere geeignete Kunststoffe sind Polyolephinen wie Polyethylen (PE), Polypropylen (PP) sowie Kunststoffe aus anderen Stoffgruppen wie Silikonen (Polyorganosiloxanen), Styrol-Polymerisate wie Polystyrol (PS), Acrylnitrilbutadienstyrol (ABS), Polyacrylate wie Polyacrylnitril (PAN), Polymethylmethacrylat (PMMA), Thermoplastische Polyester wie Polycarbonat (PC), Polyethylenterephthalat (PET), Polybytylenterephthalat (PBT), Polyphenylenether (PPE), Polyaddukte wie Epoxydharz (EP) oder Polyurethane (PU).

Insbesondere die in diesem Absatz genannten Kunststoffe sind zu erheblich geringeren Kosten verfügbar als die zuvor genannten Kuntstoffe.

Die genannten Kunststoffe sind alle bis 80 - 100 °C temperaturstabil, wodurch es möglich ist, die erfindungsgemäßen Formkörper bei 80 - 100°C zu entfeuchten und bei tieferen Temperaturen als Absorber einzusetzen. Die Entfeuchtungstemperatur kann zudem gemäß einer Weiterbildung der Erfindung im Vakuum reduziert werden.

In einer Weiterbildung der Erfindung weist das Silica Gel eine mittlere Korngröße von nicht mehr als 1 mm insbesondere nicht mehr als 0,5 mm auf. Andererseits beträgt die mittlere Korngröße gemäß einer Weiterbildung der Erfindung nicht weniger als 0,1 mm insbesondere nicht weniger als 0,2mm.

In einer Weiterbildung der Erfindung gilt für das Volumen Vₖ des Formkörpers und für die Oberfläche Aₖ des Formkörpers (Vₖ)^{2/3} / Aₖ > 1/30, insbesondere > 1/20 > 1/15.

Der Formkörper ist gemäß einer Weiterbildung der Erfindung in dem Innenraum angeordnet.

Das elektronische Gerät kann erfindungsgemäß insbesondere ein Messgerät sein. Solche Messgeräte können insbesondere Messgeräte der industriellen Prozessmesstechnik sein. Derartige Messgeräte, weisen gewöhnlich einen Sensor und eine elektronische Schaltung auf, welche die Signale des Sensors aufbereitet und zur Ausgabe an einer Anzeige oder an ein Leitsystem bereitstellt. Solche Messgeräte können insbesondere Messgeräte für Druck, Füllstand, Durchfluss, Temperatur, pH, und andere Analyseparameter umfassen.

Feuchteprobleme können bei diesen Messgeräten an beliebigen Stellen auftreten, insbesondere die Elektronik und das Sensorelement sind vor Feuchteeinflüssen zu schützen.

Unter den Druckmessgeräten sind solche mit einem Relativdrucksensor zum Messen der Differenz zwischen einem Mediendruck und einem Atmosphärendruck in der Umgebung des Sensors von besonderem Interesse, wobei solche Geräte einen Atmosphärendruckpfad aufweisen, um den Relativdrucksensor mit dem Atmosphärendruck zu beaufschlagen, wobei der Atmosphärendruckpfad insbesondere durch den Formkörper verläuft.

Allgemein ist die Erfindung auch für jegliche elektronische Geräte relevant, die insbesondere hochohmige Schaltungen unter Einfluss von Feuchtigkeit und Kondensatbildung aufweisen. Solche Geräte sind beispielsweise Hydrophone, Ultraschallwandler, Mikrophone, Elektretmikrophone, Beschleunigungsaufnehmer und jegliche kapazitive Wandler.

Gemäß einer Weiterbildung der Erfindung beträgt das Volumen des Formkörpers nicht weniger als 20 %, vorzugsweise nicht weniger als 40% und besonders bevorzugt nicht weniger als 50% des freien Volumens des Innenraums.

Ein Verfahren zum Herstellen eines Formkörpers umfasst: Herstellen einer Dispersion, welche Partikel eines Polymers zum Bilden einer Polymermatrix und Silica Gel, enthält;

Formgebung aus der Dispersion; und

Verfestigen des Formkörpers.

In einer Ausgestaltung umfasst die Formgebung Trocknen der Dispersion; Pressen der getrockneten Dispersion in eine Form zur Formung des Formkörpers. Das Verfestigen kann in dieser Ausgestaltung beispielsweise Sintern umfassen.

Allgemein kann das Verfestigen neben Sintern auch Brennen oder Polymerisieren umfassen. Andere erfindungsgemäße Verfahren der Formgebung umfassen Gießen, insbesondere Spritzgießen, und Extrudieren.

Allgemein können die Formgebung bzw. das Verfestigen gemäß einer Weiterbildung der Erfindung Pressen, heißes isostatisches Pressen, Sintern, Extrudieren und/oder Spritzen des Kompositwerkstoffs umfassen.

Die Erfindung wird nun anhand der in den Zeichnungen dargestellten Ausführungsbeispiele näher erläutert. Es zeigt:
- Fig. 1:: eine Sorptionsisotherme in Masse % von Wasser in einem Ausführungsbeispiel eines Formkörpers eines erfindungsgemäßen elektronischen Gerätes bei einer relativen Luftfeuchtigkeit von 60% bei 25 °C;
- Fig. 2:: die Wasserabsorption nach etwa 90 Stunden bei 25°C und einer relativen Luftfeuchtigkeit von 60% für verschiedene Absorbergehalte im Formkörper;
- Fig. 3:: einen schematischen Längsschnitt durch ein Ausführungsbeispiel eines erfindungsgemäßen elektronischen Gerätes; und
- Fig. 4:: einen schematischen Längsschnitt durch ein Ausführungsbeispiel eines erfindungsgemäßen Relativdruckmessumformers.

Zur Herstellung des Kompositwerkstoffs wurde eine Mischung aus 35 vol.% PTFE Pulver TFM1700 mit 65 vol.% Silica Gel (Partikelgröße 0,2 - 0,5 mm) in Ethanol dispergiert und getrocknet. Aus der getrockneten Mischung wurden zylindrische Körper bei einem Druck von 100 MPa gepresst und bei 360°C eine Stunde gesintert.

Die so erhaltenen Körper Nach dem Sinterprozess entsteht ein fester Körper der als Absorberkörper geeignet ist.

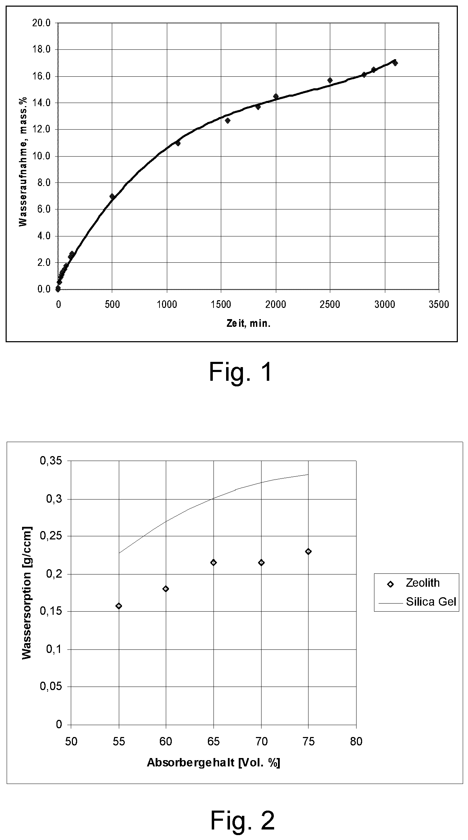

Es wurde eine Feuchteaufnahme von etwa 22 Masse-.% bei 25°C und einer relativen Luftfeuchtigkeit von 60% bzw. 45 Masse-% bei 25°C und einer relativen Luftfeuchtigkeit von 95% beobachtet. Eine typische Kennlinie der Feuchteaufnahme für ein Komposit 40 vol.% PTFE und 60 Volumen-% Silica Gel mit einer Körnung von 0,2-0,5 mm ist in Fig. 1 dargestellt. Diese Sorptionsisotherme gilt für eine relative Luftfeuchtigkeit von 60% bei 25°C.

Figur.2 betrifft den Einfluss des Absorbergehalts von Kompositwerkstoffen bzw. daraus gefertigten Formkörpern auf die Wasseraufnahme. Die optimalen Kompositwerkstoffe weisen einen Absorbergehalt von 60 vol.% bis 80 vol.%. Für diesen Bereich ändert sich beispielsweise bei den als Referenzsystem genauer untersuchten zeolith-haltigen Kompositwerkstoffen die Absorber-Packungsdichte, also die Masse des adsorbierten Wassers pro Volumeneinheit des Komposits, wenig und die Wasseraufnahme pro Volumeneinheit des Kompositwerkstoffs bleibt im wesentlichen konstant, wie in Fig. 2 dargestellt ist. Im genannten Bereich für den Absorbergehalt erreicht man damit eine gewisse Robustheit gegenüber leichten Schwankungen der Produktzusammensetzung.

Der aus den experimentellen Daten folgende Zusammenhang zwischen zur Wasserabsorption und der Silica-Gel-Konzentration ist in Fig. 2 als durchgezogene Linie dargestellt.

Die Kompositwerkstoffe unterscheiden sich mit wechselnder Zusammensetzung auch in der mechanischen Stabilität, welche mit einem steigenden Silica-Gel-Gehalt abnimmt. Die Kompositwerkstoffe mit bis 75 vol.% Silica-Gel sind mechanisch stabil bzw. formstabil. Ab 75 vol.% sind die Kompositwerkstoffe bzw. die Formkörper weich und leicht brüchig. Eine derzeit bevorzugte Kombinationen von mechanischer Stabilität und günstiger Wasseraufnahme liegt bei einem Material mit 60 - 70 vol.% Silica Gel.

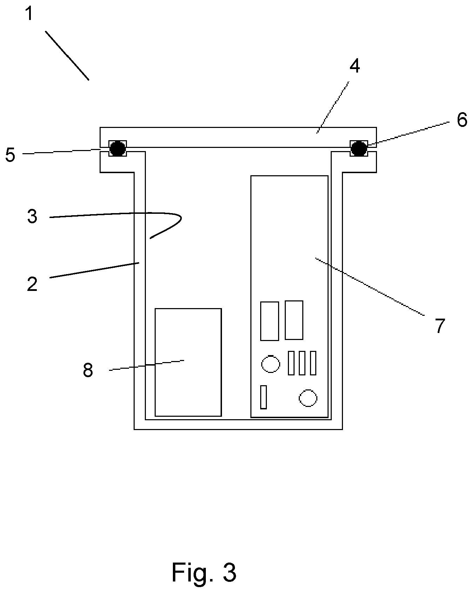

Das in Fig. 3 dargestellte Elektronische Gerät 1 umfasst einen Gehäusezylinder 2, dessen Innenraum 3 mit einem Gehäusedeckel 4 verschlossen ist. Zwischen dem Gehäusezylinder 2 und dem Gehäusedeckel verläuft ein Spalt 5, der durch einen Dichtring 6 zum Innenraum 3 abgedichtet ist, wobei eine Diffusion von Wasser in das Gehäuse damit nicht vollständig ausgeschlossen werden kann. Um eine elektronische Schaltung 7, die in dem Innenraum 3angeordnet ist, zuverlässig vor eindringender Feuchte zu schützen, ist weiterhin ein erfindungsgemäßer Formkörper 8 in dem Innenraum angeordnet.

Der Formkörper umfasst einen Komositwerkstoff mit etwa 65 vol. % Silica-Gel und 35 vol. % PTFE, wobei der Formkörper als Sinterkörper gebildet ist.

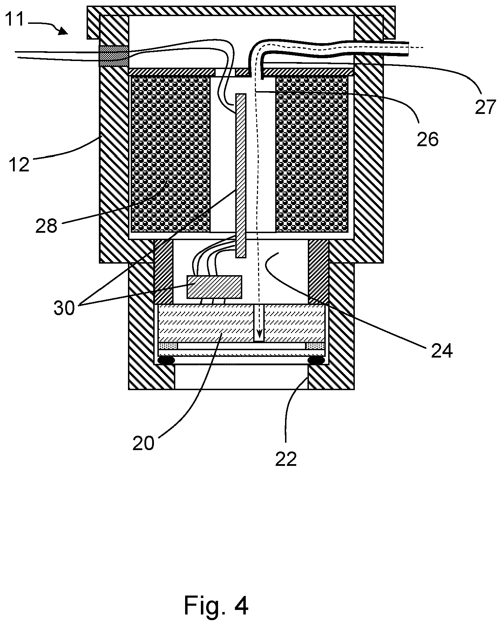

Der in Fig. 4 gezeigte Relativdruckmessumformer 11 umfasst ein Gehäuse 12 und einen Relativdrucksensor 20, welcher in dem Gehäuse angeordnet und über eine Gehäuseöffnung 22 mit einem Mediendruck beaufschlagbar ist. Durch einen Innenraum 24 des Gehäuses erstreckt sich ein Referenzluftpfad 26, der ggf. zumindest abschnittsweise in einen Schlauch 27 geführt sein kann, wobei der Referenzluftpfad durch einen erfindungsgemäßen Formkörper 28 verläuft, der in dem Innenraum 24 angeordnet ist. Der Innenraum 24 enthält weiterhin eine Verarbeitungsschaltung 30 von Signalen des Relativdrucksensors, und zur Ausgabe eines Signals, welches den Relativdruck repräsentiert, an ein Leitsystem. Der Formkörper 28 nimmt mindesten 40% des freien Volumens des Innenraums 24 ein, und ist somit in der Lage, über die Referenzluft oder Spalte zwischen Baugruppen eindringende Feuchtigkeit zu adsorbieren, und damit eine Kondensation von Wasser auf der Verarbeitungsschaltung 30 über einen Zeitraum von Jahren zu verhindern.

## Patentansprüche

1. Elektronisches Gerät, insbesondere Messgerät, welches mindestens ein Gehäuse mit mindestens einem Innenraum aufweist, welcher eine elektronische Schaltung enthält, wobei das Gerät mindestens einen Gaspfad aufweist, über welchen Wasserdampf in das Gehäuse gelangen kann,
**dadurch gekennzeichnet, dass**
das Gerät mindestens einen Formkörper aufweist, welcher einen Kompositwerkstoff umfasst, wobei der Kompositwerkstoff eine Polymermatrix und Silica Gel umfasst, wobei das Silica Gel in der Polymermatrix gebunden ist; wobei der Volumenanteil des Silica Gels am Volumen des Kompositwerkstoffs mindestens 50%, insbesondere mindestens 65% beträgt.

2. Elektronisches Gerät nach Anspruch 1, wobei die Polymermatrix ein Polymer aufweist, welches ausgewählt ist aus einer Gruppe von Polymeren die aus Fluor-Kunststoffen Polyaryletherketonen Schwefelpolymeren und hochwärmebeständigen Polymeren besteht.

3. Elektronisches Gerät nach Anspruch 1, wobei die Polymermatrix ein Polymer aufweist, welches ausgewählt ist aus einer Gruppe von Polymeren die besteht aus: PA bzw. Polyamid, PI bzw. Polyimid, PAI bzw. Polyamidimid und PEI bzw. Polyetherimid, Polyolephinen wie Polyethylen (PE), Polypropylen (PP), Silikonen bzw. Polyorganosiloxanen, Styrol-Polymerisate wie Polystyrol (PS), Acrylnitrilbutadienstyrol (ABS), Polyacrylate wie Polyacrylnitril (PAN), Polymethylmethacrylat (PMMA), Thermoplastische Polyester wie Polycarbonat (PC), Polyethylenterephthalat (PET), Polybytylenterephthalat (PBT), Polyphenylenether (PPE), Polyaddukte wie Epoxydharz (EP) oder Polyurethane (PU).

4. Elektronisches Gerät nach Anspruch 1 oder 2, wobei das Silica Gel eine mittlere Korngröße zwischen 0,1 mm und 1 mm, insbesondere zwischen 0,2 mm und 0, 5 mm aufweist.

5. Elektronisches Gerät nach einem der vorhergehenden Ansprüche, wobei für das Volumen Vₖ des Formkörpers und für die Oberfläche Aₖ des Formkörpers gilt:
(Vₖ)^{2/3} / Aₖ > 1/30, insbesondere > 1/20, vorzugsweise Aₖ > 1/15.

6. Elektronisches Gerät nach einem der vorhergehenden Ansprüche wobei der Formkörper in dem Innenraum angeordnet ist.

7. Elektronisches Gerät nach einem der vorhergehenden Ansprüche, wobei das Gerät einen Relativdrucksensor zum Messen der Differenz zwischen einem Mediendruck und einem Atmosphärendruck in der Umgebung des Sensors aufweist, wobei das Gerät einen Atmosphärendruckpfad aufweist, um den Drucksensor mit dem Atmosphärendruck zu beaufschlagen, wobei der Atmosphärendruckpfad insbesondere durch den Formkörper verläuft.

8. Elektronisches Gerät nach einem der vorhergehenden Ansprüche, wobei das Volumen des Formkörpers nicht weniger als 20 %, vorzugsweise nicht weniger als 40% und besonders bevorzugt nicht weniger als 60% des freien Volumens des Innenraums beträgt.

## Claims

1. Electronic device, particularly a measuring device, which has at least a housing with at least an interior space that contains an electronic circuit, wherein the device has at least one gas path via which water vapor can enter the housing,
**characterized in that**
the device has at least a molded body which comprises a composite material, wherein the composite material comprises a polymer matrix and silica gel, wherein the silica gel is bonded in the polymer matrix; wherein the proportion of the volume of the silica gel in the volume of the composite material is at least 50%, preferably at least 65%.

2. Electronic device as claimed in Claim 1, wherein the polymer matrix has a polymer which is selected from a group of polymers which consists of fluoroplastics polyaryletherketones, sulfur polymers and heat-resistant polymers.

3. Electronic device as claimed in Claim 1, wherein the polymer matrix has a polymer that is selected from a group of polymers which consists of: PA or polyamide, PI or polyimide, PAI or polyamide-imide and PEI or polyetherimide, polyolefines such as polyethylene (PE), polypropylene (PP), silicones or polyorganosiloxanes, styrene polymerizates such as polystyrene (PS), acrylonitrile butadiene styrene (ABS), polyacrylates such as polyacrylonitrile (PAN), poly(methyl methacrylate) (PMMA), thermoplastic polyesters such as polycarbonate (PC), polyethylene terephtalate (PET), polybutylene terephthalate (PBT), polyphenylene ether (PPE), addition polymers such as epoxy resins (EP) or polyurethane (PU).

4. Electronic device as claimed in Claim 1 or 2, wherein the silica gel has an average particle size between 0.1 mm and 1 mm, especially between 0.2 mm and 0.5 mm.

5. Electronic device as claimed in one of the previous claims, wherein the following applies for the volume V_{K} of the molded body and for the surface A_{K} of the molded body:
(V_{K})^{2/3} / A_{K} > 1/30, particularly > 1/20, preferably A_{K} > 1/15.

6. Electronic device as claimed in one of the previous claims, wherein the molded body is arranged in the interior space.

7. Electronic device as claimed in one of the previous claims, wherein the device has a relative pressure sensor for measuring the difference between a fluid pressure and an atmospheric pressure in the environment of the sensor, wherein the device has an atmospheric pressure path in order to subject the pressure sensor to the atmospheric pressure, wherein the atmospheric pressure path extends, in particular, through the molded body.

8. Electronic device as claimed in one of the previous claims, wherein the volume of the molded body is not less than 20%, preferably not less than 40% and particularly preferably not less than 60% of the free volume of the interior space.

## Revendications

1. Appareil électronique, notamment un appareil de mesure, qui comporte au moins un boîtier avec au moins un espace intérieur, lequel contient un circuit électronique, l'appareil présentant au moins un passage de gaz, par l'intermédiaire duquel de la vapeur d'eau peut parvenir dans le boîtier,
**caractérisé**
**en ce que** l'appareil comporte au moins un corps de forme, lequel comprend un matériau composite, le matériau composite étant constitué d'une matrice de polymère et d'un gel de silicate, le gel de silicate étant lié dans la matrice de polymère ; la fraction volumique du gel de silicate par rapport au volume du matériau composite étant d'au moins 50 %, notamment d'au moins 65 %.

2. Appareil électronique selon la revendication 1, pour lequel la matrice de polymère présente un polymère qui est sélectionné dans un groupe de polymères constitué de plastiques fluorés, polyaryléthercétones, polymères de soufre et polymères résistant à la chaleur.

3. Appareil électronique selon la revendication 1, pour lequel la matrice de polymère comporte un polymère, lequel est sélectionné à partir d'un groupe de polymères se composant de PA ou polyamide, PI ou polyimide et PEI ou polyétherimide, de polyoléfines tels que polyéthylènes (PE), polypropylènes (PP), silicones ou polyorganosiloxanes, de polymères de styrène tels que polystyrène (PS), acrylonitrile-styrène-butadiène (ABS), de polyacrylates tels que polyacrylonitrile (PAN), polyméthylméthacrylate (PMMA), de polyesters thermoplastiques tels que polycarbonate (PC), polyéthylènetéréphtalate (PET), polybutènetéréphtalate (PBT), polyphénylène éther (PPE), de produits de polyaddition tels que résine époxy (EP) ou polyuréthane (PU).

4. Appareil électronique selon la revendication 1 ou 2, pour lequel le gel de silicate présente une grosseur de grain comprise entre 0,1 mm et 1 mm, notamment entre 0,2 mm et 0,5 mm.

5. Appareil électronique selon l'une des revendications précédentes, pour lequel s'applique la règle suivante pour le volume V_{K} du corps de forme et pour la surface A_{K} du corps de forme :
(V_{K})^{2/3} / A_{K} > 1/30, notamment > 1/20, de préférence A_{K} > 1/15.

6. Appareil électronique selon l'une des revendications précédentes, pour lequel le corps de forme est disposé dans l'espace intérieur.

7. Appareil électronique selon l'une des revendications précédentes, pour lequel l'appareil comporte un capteur de pression relative destiné à mesurer la différence entre une pression du produit et une pression atmosphérique dans l'environnement du capteur, l'appareil présentant un passage pour la pression atmosphérique afin de soumettre le capteur de pression à la pression atmosphérique, le passage pour la pression atmosphérique traversant notamment le corps de forme.

8. Appareil électronique selon l'une des revendications précédentes, pour lequel le volume du corps de forme ne constitue pas moins de 20 %, de préférence pas moins de 40 % et particulièrement de préférence pas moins de 60 % du volume libre de l'espace intérieur.
